(19) **Europäisches Patentamt**
**European Patent Office**
**Office européen des brevets**

(11) **EP 1 674 927 A1**

(12) **EUROPEAN PATENT APPLICATION**
published in accordance with Art. 158(3) EPC

(43) Date of publication:
**28.06.2006 Bulletin 2006/26**

(51) Int Cl.:
*G03B 21/62* (1968.09)  *G03B 21/00* (1968.09)
*G02B 3/08* (1968.09)

(21) Application number: **04792368.5**

(22) Date of filing: **14.10.2004**

(86) International application number:
**PCT/JP2004/015136**

(87) International publication number:
**WO 2005/036260 (21.04.2005 Gazette 2005/16)**

(84) Designated Contracting States:
**AT BE BG CH CY CZ DE DK EE ES FI FR GB GR HU IE IT LI LU MC NL PL PT RO SE SI SK TR**

(30) Priority: **14.10.2003 JP 2003353272**

(71) Applicant: **Toppan Printing Co., Ltd.**
**Taito-ku,**
**Tokyo 110-0016 (JP)**

(72) Inventors:
• **EBINA, Kazuyoshi,**
**c/o TOPPAN PRINTING CO., LTD.**
**Tokyo 1100016 (JP)**

• **ABE, Takashi,**
**c/o TOPPAN PRINTING CO., LTD.,**
**Tokyo 1100016 (JP)**
• **TAKAHASHI, Susumu,**
**c/o TOPPAN PRINTING CO., LTD.,**
**Tokyo 1100016 (JP)**
• **TOMONO, Takao,**
**c/o TOPPAN PRINTING CO., LTD.,**
**Tokyo 1100016 (JP)**

(74) Representative: **TBK-Patent**
**Bavariaring 4-6**
**80336 München (DE)**

(54) **FRESNEL LENS, TRANSMISSION SCREEN, AND REAR PROJECTION-TYPE DISPLAY DEVICE USING THE LENS AND THE SCREEN**

(57)    The rear projection type display apparatus includes: a translucent type screen having a Fresnel lens sheet in which lens patterns having a Fresnel surface becoming a light beam transmission surface and a rise surface becoming a light beam non-transmission surface are concentrically formed, and an optical axis of the Fresnel lens being the center of the lens patterns is positioned outside the Fresnel lens sheet and an optical diffusion plate; a projector capable of projecting picture images onto the translucent type screen; and a reflection mirror between the projector and the translucent type screen; wherein the reflection mirror is roughly installed at an intermediate position between the projector and the translucent type screen.

FIG. 1

EP 1 674 927 A1

## Description

TECHNICAL FIELD

The present invention relates to a Fresnel lens sheet used for a translucent type screen, and a rear projection type display apparatus using the same.
The present application claims priority on Japanese Patent Application No. 2003-353272 filed on October 14, 2003, the entire contents of which are incorporated herein by reference.

BACKGROUND ART OF THE INVENTION

A rear projection screen has generally been employed as one of the conventional projection screens. A television set equipped with the rear projection screen is composed so that picture light projected from a projector provided with a light source, a picture display member, and a projection lens normally reaches a viewer via a Fresnel lens sheet having a Fresnel lens, and a lenticular lens sheet having a lenticular lens.

In a projection television set screen, since such optical functions are generally requested in which diffusion is wide in the horizontal direction, and diffusion is further narrowed in the vertical direction than in the horizontal direction, there are many cases where a lenticular lens is used for the diffusion in the horizontal direction, and an optical diffusion plate and an optical diffusion sheet, on which an optical diffusion agent is dispersed, are used for the diffusion in the vertical direction.

In a rear projection type display apparatus which is represented by a rear projection television, a CRT (cathode ray tube) and a liquid crystal projector are often employed for the projector. Further, in recent years, many novel technologies such as a digital mirror device (DMD), etc., have been developed for the projector.

In particular, with a projector utilizing the liquid crystal and DMD, only one projection system is sufficient, in comparison with three projection systems (3-tube system) utilizing a CRT. Therefore, the installation space in an apparatus is small, and the weight is light. In addition, since the optical system can be simplified, the liquid crystal or DMD projector is advantageous for making the images finer and further minute, and has been widely employed.

In a recent rear projection type display apparatus, a large-scale screen and a precision image are requested, and demand is great for an optical diffusion screen with which bright images of the same chromaticity can be observed in a wide area, and the apparatus equipped therewith is requested to be made thinner.

In particular, since the distance between the screen and the projector is conventionally determined by the characteristics of a Fresnel lens sheet used for a rear projection type display apparatus, the depth of the rear projection type display apparatus is larger than other currently available systems such as, for example, a liquid crystal display television set and a plasma display television set, wherein a further demand for thinning has been increasing.

Several conventional methods for attempting to thin the rear projection type display apparatus are shown below.
In a system in which a prism structure is provided on the rear side of a Fresnel lens sheet having a Fresnel lens formed thereon, the reflection light is reflected by the main mirror installed with a further narrowed interval than normally, light beams are again made incident into the Fresnel lens, and the light beams are guided to a viewer, the system thins the entirety of the rear projection type display apparatus (For example, refer to the following Patent Document Nos. 1 and 2).

The system will be able to maintain the optical utilization efficiency by utilizing the light polarization and the entire reflection. However, since the number of composed screens is increased, stray light is liable to occur, and there is a disadvantage in terms of costs.
Also, such a system has been generally known in which a plane, spherical, or an aspherical surface mirror is disposed between the projection optical system and the mirror, and the projection distance is shortened. However, the number of components that compose the rear projection type display apparatus is increased, wherein there is a difficulty in that the required assembling accuracy is increased exponentially (For example, refer to the following Patent Documents Nos. 3 and 4).

Also, such a system is available in which the optical axis from the center of the screen is shifted by combining a plurality of Fresnel lenses (including a linear type) or by cutting off the periphery of the Fresnel lens like a rectangle to make it into a screen. However, the number of composed screens is increased (For example, refer to the following Patent Document No.5), and a Fresnel lens having a large calibration ratio (small F/No.) will be required (For example, refer to the following Patent Document No. 6). Therefore, the system is inconvenient for practical applications.

It is also proposed that a Fresnel lens having the entire reflection structure is used (For example, refer to the following Patent Document Nos. 7, 8, 9 and 10).
With these methods, not only is the physical shape of the surface complex, but also the angular tolerance is made very severe because of utilizing reflection, wherein workability and productivity will be worsened, and it is understood that there is a difficulty in obtaining productivity equivalent to the conventional Fresnel lenses.

[Patent Document 1]: Japanese Unexamined Patent Application, First Publication No. H08-336091
[Patent Document 2]: Japanese Unexamined Patent Application, First Publication No. H08-339033
[Patent Document 3]: Japanese Unexamined Patent Application, First Publication No. 2002-57963
[Patent Document 4]: Japanese Unexamined Patent Application, First Publication No. H09-281904

[Patent Document 5]: Japanese Unexamined Patent Application, First Publication No. H11-160790

[Patent Document 6]: Japanese Unexamined Patent Application, First Publication No. 2001-108937

[Patent Document 7]: Japanese Unexamined Patent Application, First Publication No. 2001-337206

[Patent Document 8]: Japanese Unexamined Patent Application, First Publication No. 2002-90888

[Patent Document 9]: Japanese Unexamined Patent Application, First Publication No. 2003-114481

[Patent Document 10]: Japanese Unexamined Patent Application, First Publication No. 2003-149744

## DETAILED DESCRIPTION OF THE INVENTION

## PROBLEMS TO BE SOLVED BY THE INVENTION

For the present rear projection type display apparatus, it is requested that thinning, high performance and cost savings are achieved by as simple a structure as possible without adding a complex structure and framework along with an increase in performance as an apparatus including optical performance. As described above, in particular, the thinning thereof is behind the other points.

As one of the significant factors in hindering the thinning of the rear projection type display apparatus, there is a problem in that the projection distance for a Fresnel lens that composes a screen cannot be reduced.

In regard to a method for producing Fresnel lenses, a metal die is manufactured to produce a Fresnel lens by pattern forming. However, the Fresnel lens is greatly subjected to limitations such as the shape of a machining cutter used for manufacture of the metal die and machining conditions thereof. As a result, conventionally there is a limit in that the inclination angle (Fresnel angle) of the Fresnel surface used for refraction of light is roughly 60° to the screen surface.

The inventor has focused attention on this point, and has found that an increase in this angle is effective in shortening the projection distance.

Another factor resides in the arrangement of the main mirror, which is indispensable in reflecting and projecting projection light from a projector onto a screen in terms of the structure of a rear projection type display apparatus. In particular, it is necessary to provide the main mirror with an inclination angle, depending on the position of the projector, and the inclination angle becomes 45° at maximum. Therefore, the space required for inclination directly brings about an increase in the thickness of the rear projection type display apparatus.

Therefore, in order to solve the above-described problems, it is an object of the present invention to provide a Fresnel lens and a translucent type screen capable of achieving the shape of a Fresnel lens, by which the distance between a Fresnel lens sheet and a projector can be shortened, and independently securing off-center of the Fresnel lens sheet, which are factors hindering thinning of a rear projection type display apparatus, and capable of eliminating stray light on the translucent type screen, which is generated by return light onto the vicinity of the projector due to reflection of image light, which is projected from the projector, from the Fresnel lens and light diffusion plate, and a rear projection type display apparatus using the same.

## MEANS FOR SOLVING THE PROBLEMS

The inventor achieved a Fresnel lens sheet having a large Fresnel angle by reviewing both the method for producing metal dies and the method for molding lenses.

A Fresnel lens according to the present invention is a Fresnel lens having a lens pattern including a Fresnel surface, which becomes a light beam transmission surface, and a rise surface, which becomes a non-transmission surface, concentrically formed thereon, wherein an optical axis of the Fresnel lens, which is the center of the lens pattern, is disposed outside the Fresnel lens sheet, an angle of inclination of the Fresnel surface to the plane perpendicularly crossing the optical axis gradually increases from the optical axis toward the periphery, and the Fresnel lens sheet includes an area in which the inclination angle of the Fresnel surface is 77° or more.

In the Fresnel lens sheet according to the present invention, it is desirable that a low refractive index layer is provided on an incident surface side and/or an emission surface of the Fresnel lens.

In the Fresnel lens sheet according to the present invention, it is desirable that a static charge preventive layer is provided on at least the incident surface side of the Fresnel lens.

It is desirable that the Fresnel lens sheet according to the present invention is composed by laminating materials having different hardness and brittleness into two or more layers.

A translucent type screen according to the present invention is a translucent type screen including a Fresnel lens sheet and an optical diffusion plate, wherein a lens pattern having a Fresnel surface that becomes a light beam transmission surface and a rise surface that becomes a light beam non-transmission surface is concentrically formed on the Fresnel lens sheet, the optical axis of the Fresnel lens that is the center of the lens pattern is disposed outside the Fresnel lens sheet, the inclination angle of the Fresnel surface to the plane perpendicularly crossing the optical axis gradually increases from the optical axis toward the periphery, and the Fresnel lens sheet includes an angle of inclination of the Fresnel surface, which is 77° or more.

In the translucent type screen according to the present invention, it is desirable that the optical diffusion plate is any one of ground glass, a diffusion plate containing a filler or optical diffusion particles and the like, a lenticular sheet in which a plurality of convex cylindrical lenses are arrayed in a predetermined fixed direction, a cross-lenticular sheet in which a plurality of convex cylindrical lenses are disposed on the same surface so as to intersect in two predetermined directions, a lens sheet having a prism array, and a lens sheet having a micro lens structure in which unit lenses are two-dimensionally arrayed.

In the translucent type screen according to the present invention, it is desirable that a low refractive index layer is provided on the incident surface side and/or the emission surface side of the Fresnel lens.

In the translucent type screen according to the present invention, it is desirable that a static charge preventive layer is provided on at least the incident surface side of the Fresnel lens sheet.

In the translucent type screen according to the present invention, it is desirable that the Fresnel lens sheet is composed by laminating materials having different hardness and brittleness into two or more layers.

A rear projection type display apparatus according to the present invention is a rear projection type display apparatus including: a translucent type screen having a Fresnel lens sheet and an optical diffusion plate; a projector capable of projecting pictures on the translucent type screen; and a reflection mirror secured between the projector and the translucent type screen; wherein a lens pattern having a Fresnel surface becoming a light beam transmission surface and a rise surface becoming a light beam non-transmission surface is concentrically formed on the Fresnel lens sheet; the optical axis of the Fresnel lens, which is the center of the lens pattern, is disposed outside the Fresnel lens sheet, and the reflection mirror is roughly provided at an intermediate position between the projector and the translucent type screen.

It is desirable that the installation angle of the reflection mirror to the translucent type screen is 5° or more in the rear projection type display apparatus according to the present invention.

In the rear projection type display apparatus according to the present invention, it is desirable that the projector is installed so that pictures are diagonally projected to the translucent type screen.

In the rear projection type display apparatus according to the present invention, it is desirable that the optical diffusion plate is any one of ground glass, a diffusion plate containing a filler or optical diffusion particles and the like, a lenticular sheet in which a plurality of convex cylindrical lenses are arrayed in a predetermined fixed direction, a cross-lenticular sheet in which a plurality of convex cylindrical lenses are disposed on the same surface so as to intersect in two predetermined directions, a lens sheet having a prism array, and a lens sheet having a micro lens structure in which unit lenses are two-dimensionally arrayed.

In the rear projection type display apparatus according to the present invention, it is desirable that the reflection surface of the reflection mirror is an aspherical surface and/or an asymmetrical curved surface.

In the rear projection type display apparatus according to the present invention, it is desirable that a low refractive index layer is provided on the incident surface side and/or the emission surface side of the Fresnel lens.

In the rear projection type display apparatus according to the present invention, it is desirable that a static charge preventive layer is provided on at least the incident surface side of the Fresnel lens sheet.

In the rear projection type display apparatus according to the present invention, it is desirable that the Fresnel lens sheet is composed by laminating materials having different hardness and brittleness into two or more layers.

ADVANTAGEOUS EFFECTS OF THE INVENTION

According to the structure of the present invention, since the optical axis of a Fresnel lens, which is the center of the concentrically formed Fresnel lens pattern, is positioned outside the Fresnel lens sheet, the angle of inclination of the Fresnel surface to the plane perpendicularly crossing the optical axis of the Fresnel lens gradually increases from the optical axis of the Fresnel lens toward the periphery, and the Fresnel lens sheet includes an area in which the inclination angle of the Fresnel surface is 77° or more, there are some advantages in that the distance of projection between the Fresnel lens sheet and the projector, that is, the distance to the plane reflection mirror which is the main mirror, can be shortened. Further, a spacing below the screen of the rear projection type display apparatus can be utilized for arrangement of the projector. Furthermore, two-face chamfering of rectangular Fresnel lens sheets, which are cut out from an original circular Fresnel lens sheet concentrically formed by lens molding, is enabled.

In addition, since the installation angle of the plane reflection mirror roughly secured at an intermediate position between the projector and the translucent type screen is inclined to 5° or more to the translucent type screen, it is possible to achieve a rear projection type display apparatus capable of preventing stray light on the screen due to return light of projection images, which are applied to the screen, to the vicinity of the projector from occurring, and capable of displaying high quality projection images without adding components and processes and spoiling the advantages of the thinning thereof.

BRIEF DESCRIPTION OF THE DRAWINGS

[FIG. 1] A view depicting one structural example of a rear projection type display apparatus in which a translucent type screen according to the present invention is employed;

[FIG. 2] A schematic sectional view depicting a section of a part of a Fresnel lens sheet according to the present invention;

[FIG. 3] A partially enlarged sectional view of the lens surface of a Fresnel lens sheet according to the present invention;

[FIG. 4] A plan view depicting the outline of a Fresnel lens sheet according to the present invention;

[FIG. 5] is a structural view depicting a rear projection type display apparatus according to the present invention;

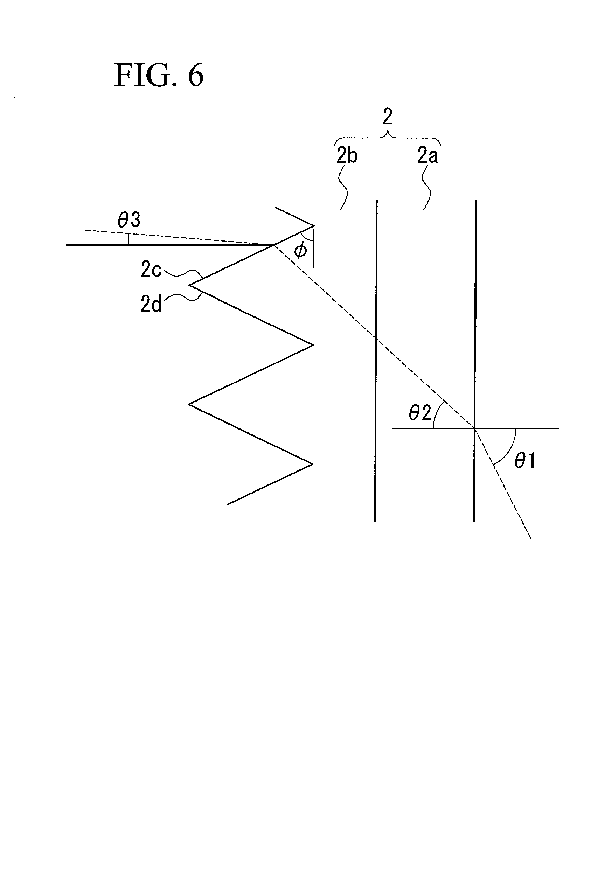

[FIG. 6] A sectional view depicting the angles of an incident light beam into the Fresnel lens prescribed in views of trial calculations of the depth dimension of the rear projection type display apparatus and an emission light beam therefrom;

[FIG. 7] A graph depicting the relationship between the Fresnel angle and the depth dimension of a 50-inch rear projection type display apparatus when the refractive index of the Fresnel lens sheet is set to 1.53;

[FIG. 8] A graph depicting the relationship between the Fresnel angle and the depth dimension of a 50-inch rear projection type display apparatus when the refractive index of the Fresnel lens sheet is set to 1.55;

[FIG. 9] A graph depicting the relationship between the Fresnel angle and the depth dimension of a 60-inch rear projection type display apparatus when the refractive index of the Fresnel lens sheet is set to 1.53;

[FIG. 10] A graph depicting the relationship between the Fresnel angle and the depth dimension of a 60-inch rear projection type display apparatus when the refractive index of the Fresnel lens sheet is set to 1.55;

[FIG. 11] A graph depicting the relationship between the Fresnel angle and the depth dimension of a 70-inch rear projection type display apparatus when the refractive index of the Fresnel lens sheet is set to 1.53; and

[FIG. 12] A graph depicting the relationship between the Fresnel angle and the depth dimension of a 70-inch rear projection type display apparatus when the refractive index of the Fresnel lens sheet is set to 1.55.

## DESCRIPTION OF THE REFERENCE SYMBOLS

1,11 Translucent type screens,

2, 12 Fresnel lens sheets,
2a Glass substrate,
2b Fresnel lens,
3, 13 Optical diffusion plates,
4, 14 Plane reflection mirrors,
5, 5', 15, 15' Projectors,
6, 16 Fresnel angles,
7 Center of concentrical circle structure of Fresnel lens

## BEST MODE FOR CARRYING OUT THE INVENTION

Hereinafter, with reference to the drawings, a description is given of the preferred embodiments of the present invention.
(Embodiment 1)

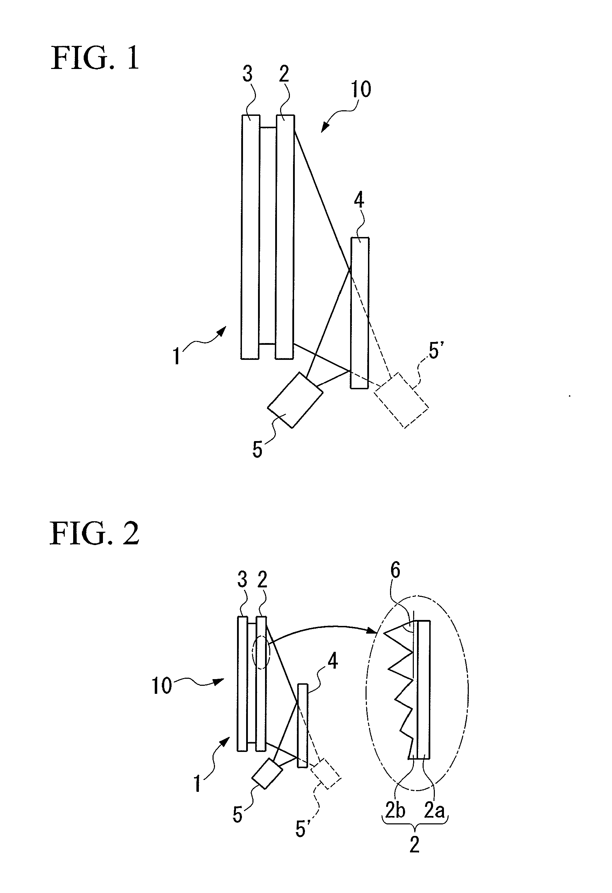

FIG. 1 illustrates one structural example of a rear projection type display apparatus 10 in which a translucent type screen 1 according to the present invention is employed. In the rear projection type display apparatus 10, the optical system is mainly composed of a translucent type screen consisting of a Fresnel lens sheet 2 and an optical diffusion plate 3, a projector 5 for projecting picture images onto the translucent type screen 1, and a plane reflection mirror 4 roughly disposed at an intermediate position between the translucent type screen 1 and the projector 5, wherein image light projected from the projector 5 is reflected toward the translucent type screen 1 by the plane reflection mirror 4 (main mirror), and projected onto the translucent type screen 1, and a viewer positioned at the opposite side thereof is able to see picture images.

The projector 5 is disposed so that picture images are diagonally projected onto the translucent type screen 1. If the projector 5 is disposed like this, a picture image is deformed in the form of a trapezoid and is projected onto the translucent type screen 1. However, the projector 5 is given a correction feature so that the picture image is not deformed in the form of a trapezoid. Also, the projector 5' and a light beam, which are expressed by dashed lines in the drawing show an example of an arrangement in the case where a picture image is directly projected on the translucent type screen 1 without providing any plane reflection mirror 4.

Next, a description is given of the Fresnel lens sheet 2 that composes the translucent type screen 1. FIG. 2 is a schematic view depicting a section of a part of the Fresnel lens sheet 2. The Fresnel lens sheet 2 has a two-layered structure composed of a glass substrate 2a such as a soda-lime glass and a float, and a Fresnel lens 2b formed on the glass substrate 2a and made of methacrylstyrene (MS) and polycarbonate (PC) resin. The glass substrate 2a is different from the Fresnel lens 2b in terms of hardness and brittleness based on a difference of the materials, wherein the rigidity of the Fresnel lens sheet 2 is carried by the glass substrate 2a, and the Fresnel lens 2b has a role of preventing the glass substrate 2a from being scattered when the screen is damaged.

The Fresnel lens 2b has a concentric lens pattern in which a Fresnel surface 2c becoming a light transmission surface and a rise surface 2d becoming a light non-transmission surface are formed by turns. In the present invention, the angle (the angle of the Fresnel surface to the plane perpendicularly crossing the optical axis) 6 in the concentric prism shown herein becomes an important element to determine the projection distance onto the translucent type screen 1.

Conventionally, there is a limitation in increasing the Fresnel angle due to restriction in the mechanism of a Fresnel lens processing machine or restriction in mass molding of Fresnel lens sheets such as yield. Therefore, the angle has been, in particular, 60° or the like at maximum. It has not been known that this point hinders thinning of a rear projection type display apparatus in which a rear projection screen is employed.

Accordingly, in the present invention, it is found out that it is possible to produce a Fresnel lens 2b with the Fresnel angle increased, by reviewing the processing conditions of the Fresnel lens, and it is possible to cause projection image light to enter the translucent type screen 1 at a very shallow angle where the Fresnel angle is set to 77° or more. That is, the projection image light at a shallow angle based on an offset arrangement of the optical axis of the Fresnel lens sheet 2 does not enter the rise surface 2d, but can enter the Fresnel surface 2c, wherein high quality images can be obtained on the translucent type screen 1.

The following table describes the Fresnel angle 6 of the Fresnel lens of the Fresnel lens sheet 2 according to the present invention.

The ring circular positions express the radius from the optical center of the Fresnel lens sheet 2 in terms of percentage, and describe the Fresnel angles at the position. In the following table, the extremely outer circle forms a profile reaching 80°.

[Table 1]

| Ring circular position | Fresnel angle* |
|---|---|
| 0% | 0.0 |
| 21% | 48.0 |
| 50% | 68.5 |
| 71% | 73.9 |
| 100% | 80.0 |
| *Unit: Degree | |

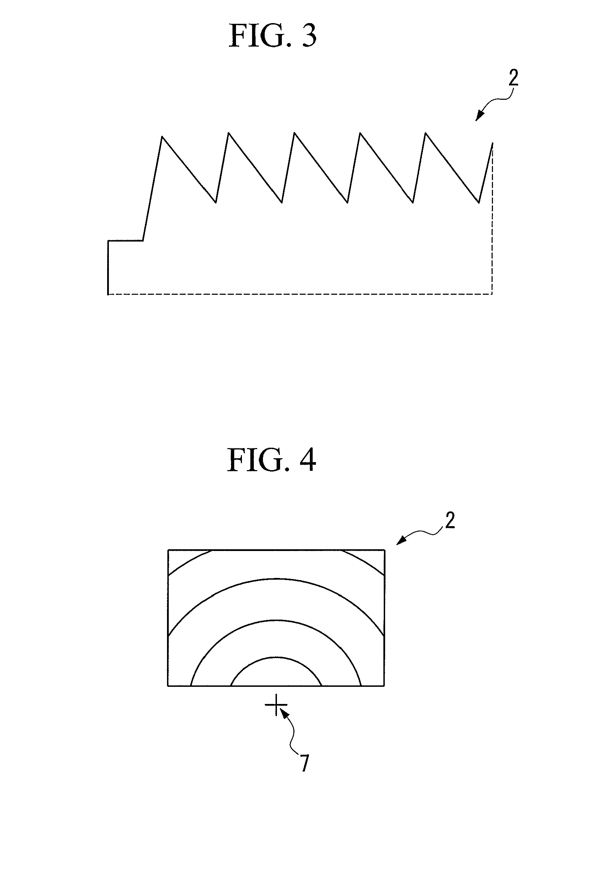

FIG. 3 is a sectional view depicting a lens surface of the Fresnel lens sheet according to the present invention. The right side thereof indicates the center side of the Fresnel lens sheet, and the left side thereof indicates the outer-circumferential side. Projection image light comes from the right lower side of FIG. 3, and the light beam thereof emits upward of FIG. 3 via refraction of the incident light on the Fresnel surface (the left side surface of the prism in the drawing).

The translucent type screen is composed by combining the Fresnel lens sheet with an optical diffusion plate, and various types of tests were carried out. The above-described effects could be confirmed, and for example, it was possible to cause projection image light to enter at a very shallow angle to the translucent type screen 1.

Further, the optical diffusion plate 3 may be a diffusion plate in which ground glass, filler, and optical diffusion particles, etc., are blended with transparent synthetic resin, a lenticular sheet in which semi-circular convex cylindrical lenses are arrayed at a predetermined pitch in one predetermined direction, a cross-lenticular sheet in which similar semi-circular convex cylindrical lenses are intersected in two predetermined directions and are arrayed on the same plane at a predetermined pitch in both the directions, or a lens sheet of a unit lens profile which can be used for a screen having a prism array and a micro lens structure. The lens sheets may be adequately selected in accordance with the use of the translucent type screen. In particular, if the cross-lenticular sheet is employed for the optical diffusion plate 3, the depth dimension of the rear projection display apparatus 10 can be shortened, and at the same time, it is possible to enlarge the field of view in the longitudinal direction of the screen. In addition, if the lens sheet having the micro lens structure is employed, it is possible to attempt to enlarge the field of view in all directions in addition to shortening of the depth dimension of the rear projection type display apparatus 10.

Where the lens sheet is composed of an optical transparent resin, it can function as a lens or a prism. It is desirable that a transparent synthetic resin sheet to which various types of molding technologies are easily applied in terms of optics production is employed for the optical transparent resin.

As the transparent synthetic resin, acrylic resin such as polymethacryl acid methyl, etc., polycarbonate resin, acrylic-styrene co-polymer resin, styrene resin, polychlorinated vinyl resin, etc., are available.

Further, the optical diffusion particles may be preferably spherical, in particular, completely spherical. Organic high polymers such as acrylic resin, polyurethane resin, polyamide resin, or inorganic compounds such as silica, etc., may be employed.

A description is given of an offset arrangement, which is another element of the problems to be solved by the present invention, of the optical axis of a Fresnel lens sheet that is the center of a concentrically formed Fresnel lens of the Fresnel lens sheet 2.

By disposing the optical axis (that is, the center 7 of the concentric circle structure) of a Fresnel lens outside the image projection area on the translucent type screen 1 used for the rear projection type display apparatus 10 as depicted in FIG. 4, the center of the concentric circle structure, which makes processing of the Fresnel lens difficult since the Fresnel angle approaches 0°, is established outside of the picture image projection area, wherein since the part is not used for the translucent type screen, the accuracy of Fresnel lens processing is not required in an area not used, and it is not necessary to pay attention to unevenness with respect to the processing of Fresnel lenses. As a result, the processing can be facilitated.

Also, since, in a conventional Fresnel lens sheet, the optical axis exists in an area used for the translucent type screen, it is impossible to take two sheets from an original plate of a single Fresnel lens sheet. However, by cutting out Fresnel sheets not including the center 7 of the Fresnel lens sheet, it becomes possible to take two rectangular Fresnel lens sheets from the original plate of a single Fresnel lens sheet, wherein the production efficiency of Fresnel lens sheets can be improved.

By adequately disposing the plane reflection mirror 4 with respect to the translucent type screen, in which the center 7 of the concentric circle structure of the Fresnel lens is offset, composed of a Fresnel lens whose Fresnel angle is 77° or more, it becomes possible to dispose the projector at the lower part of the screen, and it also becomes possible to secure effective disposition to thinning of the rear projection type display apparatus.

However, a low refractive index layer may be provided at the incident surface side of the Fresnel lens 2b in the Fresnel lens sheet 2. In the Fresnel lens sheet 2 according to the embodiment, since the substrate 2a is provided at the incident surface side of the Fresnel lens 2b, the low refractive index layer is provided on the incident surface of the substrate 2a. By providing the low refractive index layer, irregular reflection to an unintended direction can be prevented from occurring, and the transmission efficiency can be improved. In addition, the low refractive index layer may be provided on the emission surface side of the Fresnel lens 2b and may be provided on both the incident surface side and the emission surface side.

Further, a static charge preventive layer may be provided on the incident surface side of the Fresnel lens 2b on the Fresnel lens sheet 2. In addition, since, in the Fresnel lens sheet 2 according to the embodiment, the substrate 2a is provided on the incident surface side of the Fresnel lens 2b, the static charge preventive layer will be provided on the incident surface side of the substrate 2a. By providing the static charge preventive layer, the interior of the display apparatus can be made dustproof, and the image quality can be improved. Still further, the static charge preventive layer may be provided on both of the incident surface side and the emission surface side of the Fresnel lens 2b.

Also, although the Fresnel lens sheet 2 is provided with a two-layered structure which is composed of the glass substrate 2a such as a soda-lime glass, float, etc., and the Fresnel lens 2b made of methacrylic styrene (MS) resin and polycarbonate (PC) resin, the Fresnel lens sheet may be composed by laminating different types of materials having different hardness and brittleness by three or more layers.

Further, a reflection mirror whose reflection surface is not a plane but a curved surface may be used instead of the plane reflection mirror 4. By employing such a reflection mirror, where the projector 5 is disposed so that a picture image is diagonally projected onto the translucent type screen 1, it is possible to correct the picture image so that the picture image is not deformed in the form of a trapezoid, without the use of the correction feature of the projector 5. In addition, by concurrently employing the correction feature of the projector 5 and an aspherical reflection mirror, it is possible to make the projection angle further shallow to the translucent type screen 5 of the projector 5 than in the prior arts (that is, the projection angle can be made smaller). Therefore, it is possible to attempt to thin the display apparatus. Furthermore, the reflection mirror may be an aspherical surface and symmetrical, or may be an aspherical surface and asymmetrical.

(Embodiment 2)

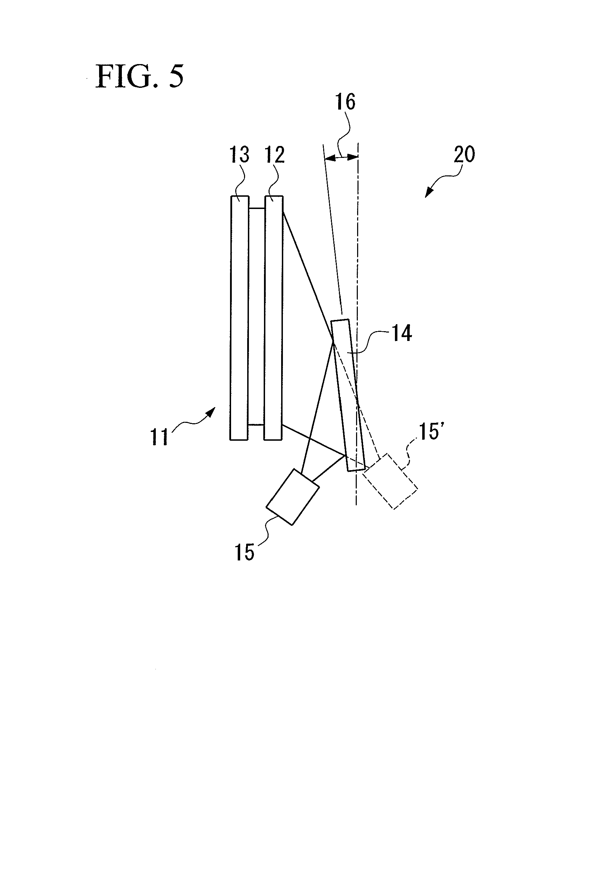

FIG. 5 is another structural example of the rear projection type display apparatus 20 in which a translucent type screen 1 according to the present invention is employed. In the rear projection type display apparatus 20, the optical system thereof is mainly composed of a translucent type screen 11 consisting of a Fresnel lens 12 and an optical diffusion plate 13, a projector 15 for projecting picture images onto the translucent type screen 11, and a plane reflection mirror 14 roughly disposed at an intermediate position between the translucent type screen 11 and the projector 15. The drawing depicts a conceptual view in the case where the plane reflection plate 14 is installed with inclination.

Herein, the projector 15' and light beams, which are expressed with dashed lines in the drawing show an arrangement in the case where no plane reflection plate 14 is provided, and picture images are projected directly onto the translucent type screen 11.

In FIG. 1, where the position of the projector 5 is shifted from the center position of the translucent type screen 1 and the perpendicular line from the projector 5 to the translucent type screen 1 is installed outside the surface of the translucent type screen 1, since the projector 5 and the translucent type screen 1 do not interfere with each other, there are many cases where the plane reflection plate 4 is installed in parallel to the translucent type screen 1. This is advantageous in terms of thinning of the rear projection type display apparatus 10. However, there may be a case where, when image light is projected from the projector 5, stray light is generated on the translucent type screen 1 due to return light to the vicinity of the projector 5 based on reflection of the Fresnel lens 2 and the diffusion plate 3.

This is due to that reflection light based on the diffusion plate becomes the main factor. It was difficult to easily remove the reflection light by means of the conventional optical system configuration. Therefore, in order not to receive influence of the stray light, the interval between the optical axis of the projector 5 and the optical axis of the Fresnel lens 2 is widened in accordance with the projection distance of the projector 5 by setting the installation angle 16 of the plane reflection plate 14 to 5° or more with respect to the translucent type screen 11. For example, in a translucent type screen 1 whose diagonal length of the screen is 50 inches, if the case where the installation angle 16 is 0° and the case where the installation angle 16 is 5° are compared with each other, the interval is widened only by 18.7 millimeters. And similarly, in a translucent type screen 1 whose diagonal length of the screen is 70 inches, if the case where the installation angle 16 is 0° and the case where the installation angle 16 is 5° are compared with each other, the interval is widened only by 33.3 millimeters. Thus, if the interval between the projector 5 and the plane reflection plate 14 is widened, it has been determined that the effect of suppressing the above-described problem remarkably appears.

If the installation angle 16 of the plane reflection plate 14 is set to 5° or more with respect to the translucent type screen 11 composed of a Fresnel lens sheet in which the concentric circle structure of the Fresnel lens described above is shifted from the screen, the optical axis of the center thereof is not in the area on the screen, and the Fresnel angle is 77° or more, such a problem is removed, by which stray light is generated on the translucent type screen 1 due to return light of image light projected from the projector 15 to the vicinity of the projector 15 due to reflection of the Fresnel lens 12 and the diffusion plate 13, wherein it is possible to see higher quality images through the translucent type screen 11.

Since, in the present invention, the optical axis of the Fresnel lens being the center of a concentrically formed Fresnel lens sheet is positioned outside the Fresnel lens sheet, and the Fresnel lens sheet has an area in which the Fresnel angle of the Fresnel surface of a lens pattern that gradually increases from the optical axis of the Fresnel lens toward the periphery becomes 77° or more, the projection distance between the Fresnel lens sheet and the projector, that is, the distance of the plane reflection mirror being the main mirror can be shortened, thereby thinning the depth dimension of the rear projection type display apparatus can be achieved.

Further, if the optical axis of the Fresnel lens is located outside the Fresnel lens sheet, it is possible to take two rectangular Fresnel lens sheets cut out from an original plate of a circular Fresnel lens sheet, wherein the production efficiency can be improved.

Also, by inclining the installation angle of the plane reflection plate roughly secured at an intermediate position between the projector and the translucent type screen by 5° with respect to the translucent type screen, it is possible to obtain a rear projection type display apparatus capable of preventing stray light on the screen due to return light of projection images onto the screen in the vicinity of the projector from occurring, and capable of displaying higher quality projection images.

(Examples)

A description is given of a trial calculation of the depth dimension (thickness) of the rear projection type display apparatus 10 embodied for the present invention. When carrying out a trial calculation, as depicted in FIG.

6, it is assumed that the Fresnel angle is $\phi$, the angle formed by the normal line (parallel to the optical axis) of the flat surface of the Fresnel lens sheet 2 and the light beam made incident into the flat surface is $\theta 1$ (already known), the angle formed by the normal line of the flat surface of the Fresnel lens sheet 2 and the light beam emitted from the flat surface is $\theta 2$ (already known), and the angle formed by the normal line of the flat surface of the Fresnel lens sheet 2 and the light beam emitted from the Fresnel surface is $\theta 3$ (already known). It is also assumed that the refractive index of the Fresnel lens sheet 2 is n, the longitudinal length of the translucent type screen 1 is h, and the depth dimension of the rear projection type display apparatus 10 is w.

In addition, it is assumed that the depth dimension w is one-half the projection distance of the projector 15, a light beam parallel to the optical axis is emitted from the Fresnel lens 2b (that is, $\theta 3=0$), and the optical center of the Fresnel lens sheet 2 is provided at a position protruded by a length equivalent to 10% of the longitudinal length of the translucent type screen 1 from the lower edge of the Fresnel lens sheet 2.

Under the above-described assumption, the following calculations were carried out to calculate the depth dimension w of the rear projection type display apparatus 10.

First, values of n, h and $\phi$ are adequately determined. Continuously, the respective values were substituted in the following formulas, and $\theta 1$ was calculated.

(Formula 1)

$$(\text{Formula 1})$$

$$\theta_2 = \sin^{-1}\left( \left( \frac{\sin \theta_1}{n} \right) \right)$$

$$(\text{Formula 2})$$

$$\theta_3 = \sin^{-1}(n \cdot \sin(\phi - \theta_2)) - \phi$$

And, the value of $\theta 1$ was substituted into the following formula, and w was calculated.

$$(\text{Formula 3})$$

$$W = \frac{1.1 \times h}{2 \cdot \tan(\theta_1)}$$

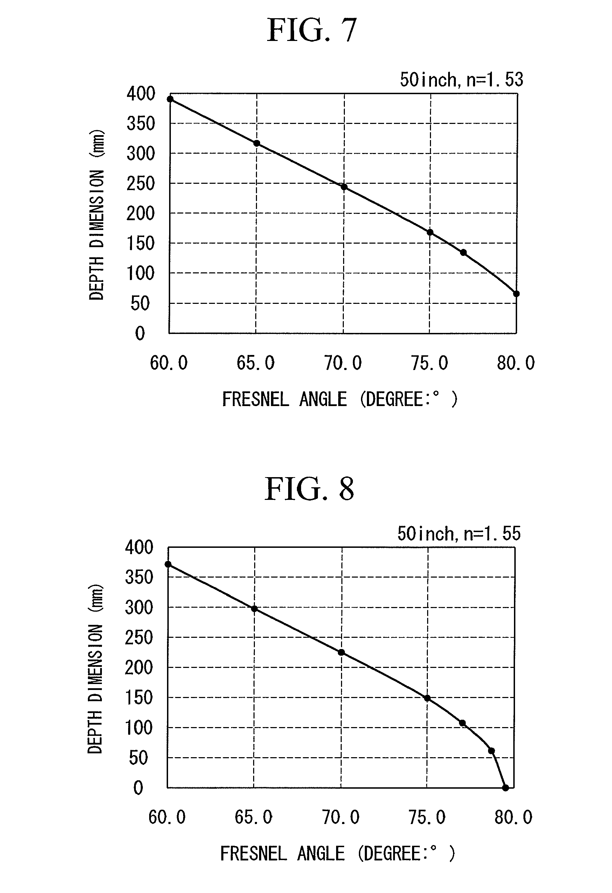

FIG. 7 shows the results of a trial calculation on how the depth dimension w of the rear projection type display apparatus 10 changes by varying the Fresnel angle φ when the length of the diagonal length of the translucent type screen 1 is 50 inches, and the refractive index n of the Fresnel lens sheet 2 is 1.53. Also, the longitudinal length h of the translucent type screen 1 is determined based on the length/width ratio of the translucent type screen 1. Also, FIG. 8 shows the results of a trial calculation similar thereto under the assumption that the refractive index n of the Fresnel lens sheet 2 is 1.55.

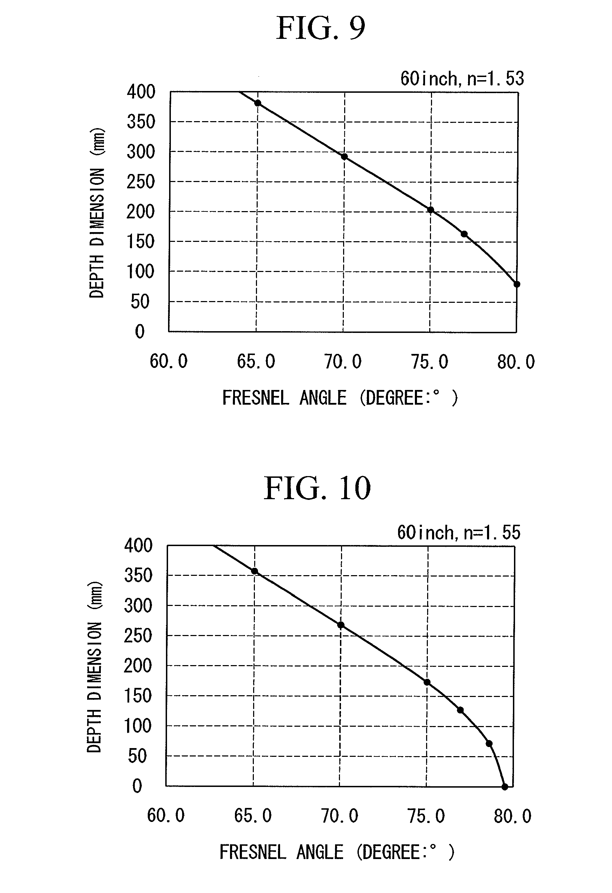

FIG. 9 shows the results of a trial calculation on how the depth dimension w of the rear projection type display apparatus 10 changes by varying the Fresnel angle φ when the length of the diagonal length of the translucent type screen 1 is 60 inches, and the refractive index n of the Fresnel lens sheet 2 is 1.53. Also, FIG. 10 shows the results of a trial calculation similar thereto under the assumption that the refractive index n of the Fresnel lens sheet 2 is 1.55.

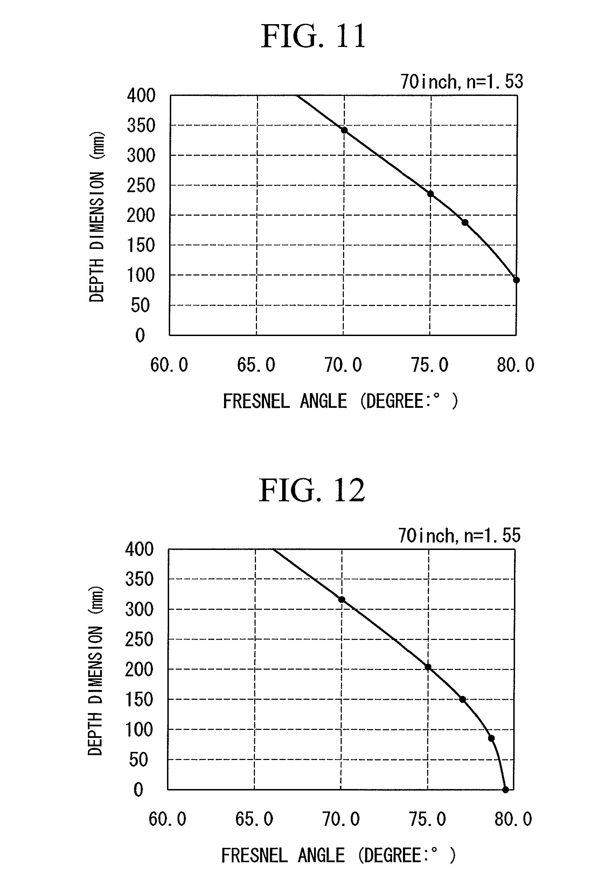

FIG. 11 shows the results of a trial calculation on how the depth dimension w of the rear projection type display apparatus 10 changes by varying the Fresnel angle φ when the length of the diagonal length of the translucent type screen 1 is 70 inches, and the refractive index n of the Fresnel lens sheet 2 is 1.53. Also, FIG. 12 shows the results of a trial calculation similar thereto under the assumption that the refractive index n of the Fresnel lens sheet 2 is 1.55.

As has been made clear in FIG. 7 and FIG. 8, when the Fresnel angle φ is 77°, the depth dimension w of the rear projection type display apparatus 10 whose diagonal length is 50 inches is 135mm when n=1.53, and 106mm when n=1.55.

As has been made clear in FIG. 9 and FIG. 10, when the Fresnel angle φ is 77°, the depth dimension w of the rear projection type display apparatus 10 whose diagonal length is 60 inches is 162mm when n=1.53, and 126mm when n=1.55.

As has been made clear in FIG. 11 and FIG. 12, when the Fresnel angle φ is 77°, the depth dimension w of the rear projection type display apparatus 10 whose diagonal length is 70 inches is 189mm when n=1.53, and 148mm when n=1.55.

In either case described above, when the Fresnel angle is less than 77°, the depth dimension w only shows a linear-functional change. However, as the Fresnel angle exceeds 77°, it is understood that the depth dimension w quadratic-functionally changes, and becomes remarkably short.

As described above, although preferred embodiments have been described above, the present invention is not limited to the above-described embodiments. The invention may be subjected to addition, omission, replacement and other modifications of the configuration in a range not departing from the spirit of the present invention. The invention is not limited by the above description, but it is limited by the scopes of Claims attached herewith.

INDUSTRIAL APPLICABILITY

The invention relates to a rear projection type display apparatus including: a translucent type screen having a Fresnel lens sheet in which lens patterns having a Fresnel surface becoming a light beam transmission surface and a rise surface becoming a light beam non-transmission surface are concentrically formed, and the optical axis of the Fresnel lens being the center of the lens patterns is positioned outside the Fresnel lens sheet and an optical diffusion plate; a projector capable of projecting picture images onto the translucent type screen; and a reflection mirror between the projector and the translucent type screen; wherein the reflection mirror is roughly installed at an intermediate position between the projector and the translucent type screen.

With the rear projection type display apparatus according to the present invention, it is possible to prevent stray light on the screen due to return light to the vicinity of the projector based on projection images on the screen from occurring, wherein it is possible to obtain a rear projection type display apparatus capable of displaying high quality projection images without adding components and processes and spoiling advantages of the thinning thereof.

**Claims**

1. A Fresnel lens sheet in which lens patterns having a Fresnel surface becoming a light beam transmission surface and a rise surface becoming a light beam non-transmission surface are concentrically formed, wherein an optical axis of a Fresnel lens being the center of the lens patterns is disposed outside the Fresnel lens sheet, an angle of inclination of the Fresnel surface to the plane perpendicularly crossing the optical axis gradually increases from the optical axis toward the periphery, and the Fresnel lens sheet comprises an area where the angle of inclination of the Fresnel surface is 77° or more.

2. The Fresnel lens sheet according to claim 1, wherein a low refractive index layer is provided on an incident surface side and/or an emission surface side of the Fresnel lens.

3. The Fresnel lens sheet according to claim 1, wherein a static charge preventive layer is provided on at least an incident surface of the Fresnel lens.

4. The Fresnel lens sheet according to claim 1, wherein the Fresnel lens sheet is composed by laminating materials having different hardness and brittleness into two or more layers.

5. A translucent type screen comprising a Fresnel lens sheet and an optical diffusion plate, wherein:

lens patterns having a Fresnel surface becoming a light beam transmission surface and a rise surface becoming a light beam non-transmission surface are concentrically formed on the Fresnel lens sheet;

an optical axis of the Fresnel lens being the center of the lens patterns is disposed outside the Fresnel lens sheet;

an angle of inclination of the Fresnel surface to the plane perpendicularly crossing the optical axis gradually increases from the optical axis toward the periphery; and

the Fresnel lens sheet comprises an area in which the angle of inclination of the Fresnel surface is 77° or more.

6. The translucent type screen according to claim 5, wherein

the optical diffusion plate is any one of ground glass, a diffusion plate containing a filler or optical diffusion particles and the like, a lenticular sheet in which a plurality of convex cylindrical lenses are arrayed in one predetermined fixed direction, a cross-lenticular sheet in which a plurality of convex cylindrical lenses are disposed on the same surface so as to intersect in two predetermined directions, a lens sheet having a prism array, and a lens sheet having a micro lens structure in which unit lenses are two-dimensionally arrayed.

7. The translucent type screen according to claim 5, wherein

a low refractive index layer is provided on the incident surface side and/or the emission surface side of the Fresnel lens.

8. The translucent type screen according to claim 5, wherein

a static charge preventive layer is provided on at least the incident surface side of the Fresnel lens sheet.

9. The translucent type screen according to claim 5, wherein

the Fresnel lens sheet is composed of laminating materials having different hardness and brittleness into two or more layers.

10. A rear projection type display apparatus comprising:

a translucent type screen having a Fresnel lens sheet and an optical diffusion plate;
a projector capable of projecting picture images onto the translucent type screen; and
a reflection mirror provided between the projector and the translucent type screen; wherein
lens patterns having a Fresnel surface becoming a light beam transmission surface and a rise surface becoming a light beam non-transmission surface are concentrically formed on the Fresnel lens sheet, an optical axis of the Fresnel lens being the center of the lens patterns is disposed outside the Fresnel lens sheet, and
the reflection mirror is roughly installed at an intermediate position between the projector and the translucent type screen.

11. The rear projection type display apparatus according to Claim 10, wherein
an installation angle of the reflection mirror to the translucent type screen is 5° or more.

12. The rear projection type display apparatus according to Claim 10, wherein
the projector is disposed so that picture images are diagonally projected onto the translucent type screen.

13. The rear projection type display apparatus according to claim 10, wherein
the optical diffusion plate is any one of ground glass, a diffusion plate containing a filler or optical diffusion particles and the like, a lenticular sheet in which a plurality of convex cylindrical lenses are arrayed in a predetermined fixed direction, a cross-lenticular sheet in which a plurality of convex cylindrical lenses are disposed on the same surface so as to intersect in two predetermined directions, a lens sheet having a prism array, and a lens sheet having a micro lens structure in which unit lenses are two-dimensionally arrayed.

14. The rear projection type display apparatus according to claim 10, wherein
the reflection surface of the reflection mirror is an aspherical surface and/or an asymmetrically curved surface.

15. The rear projection type display apparatus according to claim 10, wherein
a low refractive index layer is provided on an incident surface side and/or an emission surface side of the Fresnel lens.

16. The rear projection type display apparatus according to claim 10, wherein
a static charge preventive layer is provided on at least an incident surface side of the Fresnel lens sheet.

17. The rear projection type display apparatus according to claim 10, wherein
the Fresnel lens sheet is composed by laminating materials having different hardness and brittleness into two or more layers.

FIG. 1

FIG. 2

## FIG. 3

## FIG. 4

FIG. 5

# FIG. 6

# FIG. 7

50inch, n=1.53

# FIG. 8

50inch, n=1.55

# FIG. 9

60inch, n=1.53

# FIG. 10

60inch, n=1.55

# FIG. 11

70inch, n=1.53

# FIG. 12

70inch, n=1.55

## INTERNATIONAL SEARCH REPORT

| International application No. |
|---|
| PCT/JP2004/015136 |

**A. CLASSIFICATION OF SUBJECT MATTER**
Int.Cl⁷ G03B21/62, G03B21/00, G02B3/08

According to International Patent Classification (IPC) or to both national classification and IPC

**B. FIELDS SEARCHED**

Minimum documentation searched (classification system followed by classification symbols)
Int.Cl⁷ G03B21/62, G03B21/00, G02B3/08

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-177477 A (Dainippon Printing Co., Ltd.), 27 June, 2003 (27.06.03), Full text; all drawings (Family: none) | 1-17 |
| Y | JP 2002-207254 A (NEC View Technology, Ltd.), 26 July, 2002 (26.07.02), & US 2002/89743 A1 & DE 10200526 A | 1-17 |
| Y | JP 2000-258845 A (Kuraray Co., Ltd.), 22 September, 2000 (22.09.00), Full text; all drawings & EP 1006400 A2 & CN 1261156 A & KR 00/47738 A & US 6282034 B1 | 1-17 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 January, 2005 (19.01.05) | 08 February, 2005 (08.02.05) |

| Name and mailing address of the ISA/ Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2004/015136 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-66206 A  (Dainippon Printing Co., Ltd.),<br>05 March, 2003 (05.03.03),<br>Full text; all drawings<br>(Family: none) | 2-4,6-9,13,<br>15-17 |
| Y | JP 2959644 B2  (Hitachi, Ltd.),<br>30 July, 1999 (30.07.99),<br>Full text; all drawings<br>& US 5200854 A | 6,13 |
| Y | JP 11-149124 A  (Seiko Epson Corp.),<br>02 June, 1999 (02.06.99),<br>Full text; all drawings<br>(Family: none) | 10-17 |
| Y | JP 2001-337394 A  (Matsushita Electric<br>Industrial Co., Ltd.),<br>07 December, 2001 (07.12.01),<br>Full text; all drawings<br>(Family: none) | 14 |

Form PCT/ISA/210 (continuation of second sheet) (January 2004)